(19) Europäisches Patentamt

European Patent Office

Office européen des brevets

(11) Veröffentlichungsnummer : **0 363 623 B1**

# (12) EUROPÄISCHE PATENTSCHRIFT

(45) Veröffentlichungstag der Patentschrift :
**15.01.92 Patentblatt 92/03**

(51) Int. Cl.$^5$ : **G01D 5/26,** G01L 1/24

(21) Anmeldenummer : **89116150.7**

(22) Anmeldetag : **31.08.89**

(54) Einrichtung zur Messung des Kontaktdruckes an Stromabnehmern mit einem Drucksensor.

(30) Priorität : **09.09.88 AT 2216/88**

(43) Veröffentlichungstag der Anmeldung :
**18.04.90 Patentblatt 90/16**

(45) Bekanntmachung des Hinweises auf die
Patenterteilung :
**15.01.92 Patentblatt 92/03**

(84) Benannte Vertragsstaaten :
**AT DE ES IT**

(56) Entgegenhaltungen :
**APPLIED OPTICS, Band 26, Nr. 11, 1. Juni 1987
LAGAKOS et al. "Microbend fiber-optic sensor" Seiten 2171-2180**

(73) Patentinhaber : **Siemens Aktiengesellschaft
Österreich
Siemensstrasse 88 - 92
A-1210 Wien (AT)**

(84) Benannte Vertragsstaaten :
**AT**
Patentinhaber : **SIEMENS
AKTIENGESELLSCHAFT Berlin und München
Wittelsbacherplatz 2
W-8000 München 22 (DE)**

(84) Benannte Vertragsstaaten :
**DE ES IT**

(72) Erfinder : **Müller, Georg, Dipl.-Ing.
Strohberggasse 25/3
A-1120 Wien (AT)**

EP 0 363 623 B1

## Beschreibung

Die Erfindung betrifft eine Einrichtung zur Messung des Kontaktdruckes an elektrischen Stromabnehmern mit einem Drucksensor, als dessen Ausgangsgröße ein Lichtstrom auftritt, der entsprechend dem auftretenden Kontaktdruck moduliert ist, wobei dieser modulierte Lichtstrom über einen Lichtwellenleiter einem optoelektronischen Wandler und, von diesem in ein elektrisches Signal umgewandelt, zur Auswertung dem Eingang eines Reglers zugeführt ist.

Bei geregelten Stromabnehmern ist es erforderlich, die Druckkraft zwischen Schleifleiste und Fahrdraht, die die Regelgröße darstellt, bzw. die praktisch meßbare Druckkraft zwischen Wippe und Schleifleiste, dauernd zu messen und den Meßwert bzw. die diesen repräsentierende Meßgröße an den im Inneren der Lokomotive befindlichen Regler zu übertragen. Dazu sind viele Anordnungen erdacht worden, bei denen der Druck entweder direkt oder durch die von ihm bewirkte Längenänderung an einem Federelement gemessen wird.

Die Übertragung der Meßwerte erfolgt entweder pneumatisch, hydraulisch oder elektrisch, optisch. Ohne die beiden erstgenannten Prinzipien näher zu beschreiben, kann als Vorteil die einfache Lösung des Isolationsproblems, das durch die große Potentialdifferenz zwischen dem Hochspannungspotential des Stromabnehmers und dem Wagenpotential verursacht wird, durch einfache Verwendung elektrisch nichtleitender Übertragungsmedien sowie wenigstens teilweise aus nichtleitendem Material gefertigter Übertragungsleitungen, als Nachteil jedoch die Komprimierbarkeit bzw. die Trägheit dieser Übertragungsmedien genannt werden.

Der letzte Stand der Technik bei elektrischen Anordnungen kennt die Verwendung von Piezokristallen, die bekanntlich eine dem Druck proportionale Spannung abgeben bzw. von Drucksensoren nach dem piezoresistiven Prinzip, die ihren ohmschen Widerstand druckabhängig verändern. Ähnliche Anordnungen arbeiten unter Verwendung von Dehnmeßstreifen.

Die genannten Anordnungen erfordern jedoch eine Elektronik, um die Meßgrößen in Wechselstrom- oder Wechselspannungsgrößen umzuwandeln, die über den wegen der großen Potentialdifferenz zwischen Stromabnehmer und Wagenkasten erforderlichen Trenntransformator übertragen werden können. Für diese Elektronik ist eine ausreichende elektrische Energieversorgung erforderlich, die entweder über den Trenntransformator oder durch eine eigene Batterie zu bewerkstelligen ist.

Eine andere bekannte Anordnung weist zusätzlich eine Optoelektronik auf, durch die die Meßgrößen in optische Signale umgewandelt werden, die über eine — elektrisch nichtleitende — optische Verbindung zum Wagenkasten übertragen werden können. Das hinsichtlich der erforderlichen Energieversorgung gesagte gilt jedoch auch für diesen Fall.

Die genannten Nachteile treten bei der erfindungsgemäßen Einrichtung, die im Patentanspruch 1, gekennzeichnet ist, nicht auf.

Die mit dieser Anordnung verknüpften Vorteile sind darin zu sehen, daß die Bereitstellung elektrischer Hilfsenergie entfällt, daß dadurch keine Probleme der Isolation oder der Potentialtrennung auftreten, daß die Drucksonde relativ leicht und klein ausführbar ist und damit nahe bei der Kontaktstelle, nämlich als Element der Lagerung der Schleifleisten in der Stromabnehmerpalette in serienmäßige Stromabnehmer einfach einfügbar ist, daß die Drucksonde keine beweglich gelagerten Teile aufweist und daher keiner Wartung bedarf, aber dennoch leicht austauschbar ist. Wegen des Fehlens beweglich gelagerter Teile kann die Drucksonde auch völlig staub- und wasserdicht ausgeführt werden.

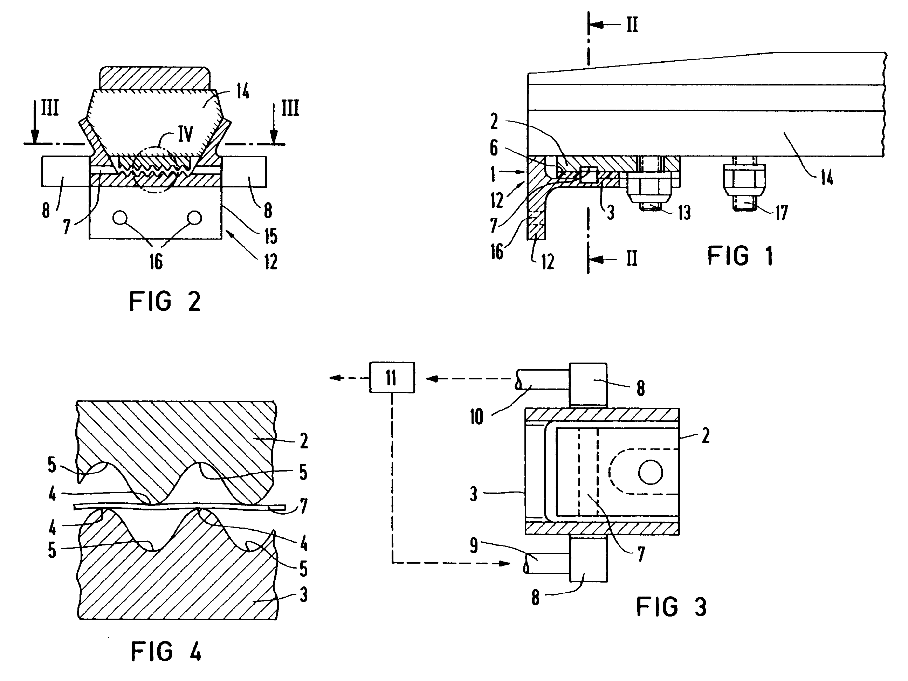

Ein Microbend-fiberoptischer sensor, der z.B. zur Druckmessung geeignet ist, ist in APPLIED OPTICS, Bd. 26, Nv. 11, 1. Juni 1987, seiten 2171-2180, insbesondere siehe Fig. 1 auf Seite 2172 beschrieben.

Anhand von Zeichnungsfiguren wird nachfolgend ein Ausführungsbeispiel der Erfindung näher beschrieben :

Fig. 1          zeigt einen Längsschnitt durch einen Drucksensor, der erfindungsgemäß als Winkelverbindungsstück zwischen der Schleifleiste und der hier nicht dargestellten Palette dient.

Fig. 2 und 3    zeigen dazu orthogonale Schnittansichten

Fig. 4          zeigt ein vergrößertes Detail aus der Fig. 2.

Wie den Figuren zu entnehmen ist, besteht der als Drucksensor 1 verwendete bekannte Microbending-Modulator aus zwei Platten 2, 3, die je eine strukturierte Fläche mit einem streifenförmigen Bereich wellenförmiger Erhöhungen 4 und Vertiefungen 5 der Oberfläche aufweisen. Diese Platten 2, 3, sind mittels einer geklebten elastischen Zwischenschicht 6 mit zueinandergekehrten strukturierten Flächen miteinander verbunden und derart distanziert, daß im drucklosen Zustand durch die gegeneinander versetzten Erhöhungen 4 der Platten 2 und 3 eine ausgespannte Lichtleitfaser 7 nur unwesentliche Krümmungen erfährt. Dies ist in Fig. 4 besonders deutlich zu erkennen. Bei Auftreten einer Druckkraft wird die elastische Zwischenschicht 6 komprimiert, der Abstand zwischen den Platten 2, 3 wird verringert und die Krümmungen in der Lichtleitfaser 7 werden verstärkt. Dies verursacht eine zunehmende Auskopplung der geführten Moden, die sich bei einer perfekt symmetrischen und homogenen Faser noch ungestört entlang der Faserachse ausbreiten, vom Kern in den Mantel. Hier soll vorteilhaft eine Faser mit gesteigerter Empfindlichkeit bezüglich Kopplung zwischen Kern und Mantel verwendet werden.

Die Lichtleitfaser 7 ist mittels zweier Winkelanschlüsse 8 optisch mit den beiden Lichtwellenleitern 9, 10 verbunden. Die Lichtwellenleiter 9, 10 können je nach Erfordernis alle vorzugsweise vier für einen Stromabnehmer vorzusehenden Drucksensoren 1, miteinander und mit den im Wagenkasten angeordneten Geräten verbinden. Für Meßzwecke wird eine getrennte, für Betriebszwecke jedoch eine beliebig zusammengefaßte Niederführung aller Lichtwellenleiter 9, 10 von Vorteil sein.

Die Lichtwellenleiter können ohne weitere elektrische Schutzmaßnahmen direkt vom Stromabnehmer zu den im Wagenkasten angeordneten Geräten geführt werden, da sie zur Gänze aus elektrisch nichtleitendem Material bestehen. Dazu können handelsübliche Lichtwellenleiter-Kabel verwendet werden, in denen eine Mehrzahl von Lichtwellenleitern zusammengeführt sind und die mechanisch sehr widerstandsfähig ausgeführt sind.

Insbesondere aus Fig. 1 ist ersichtlich, wie unter vorteilhafter Ausnützung der Gegebenheiten erfindungsgemäß ein Microbending-Modulator als winkelförmiges Befestigungselement 12 ausgebildet und angeordnet ist. Die eine Platte 2 ist mittels einer Schraube 13 an ihrer nichtstrukturierten Fläche mit der Unterseite der Schleifleiste 14 verbunden, an die andere Platte 3 ist etwa rechtwinklig ein Schenkelteil 15 angesetzt, der zwei Löcher 16 zur Verschraubung mit der hier nicht dargestellten Palette aufweist. Die Schraube 17 dient dazu, um mittels eines hier nicht gezeigten flexiblen Leiters die galvanische Verbindung zwischen Schleifleiste und Palette bzw. Oberarmgestänge des Stromabnehmers herzustellen.

## Patentansprüche

1. Einrichtung zur Messung des Kontaktdruckes an elektrischen Stromabnehmern mit einem Drucksensor, als dessen Ausgangsgröße ein Lichtstrom auftritt, der entsprechend dem auftretenden Kontaktdruck moduliert ist und über einen Lichtwellenleiter (9, 10) in einen optoelektronischen Wandler läuft und, von diesem in ein elektrisches Signal umgewandelt wird, das zur Auswertung dem Eingang eines Reglers zugeführt ist, **dadurch gekennzeichnet,** daß der Drucksensor (1) ein Microbending-Modulator ist, dem über den angeschlossenen Lichtwellenleiter (10) ein konstanter Lichtstrom zugeführt ist und daß der Drucksensor (1) als Austauschteil für Konstruktionselemente des Stromabnehmers, vorzugsweise für zur Befestigung einer Schleifleiste (14) an einer Palette paarweise vorgesehene Befestigungselemente (12), ausgebildet und an deren Stelle einbaubar ist.

## Claims

1. Device for measuring the contact pressure at electrical pantographs with a pressure sensor, the output variable of which appears as a light flux which is modulated according to the apparent contact pressure and passes via an optical waveguide (9, 10) into an electrooptical transducer, and is converted by this transducer into an electrical signal which ist fed to the input of a controller for evaluation, characterised in that the pressure sensor (1) is a microbending modulator which is supplied with a constant light flux via the optical waveguide (10) connected thereto, and in that the pressure sensor (1) is designed as a replacement part for the structural elements of the pantograph, preferably for pairs of mounting elements (12), provided for mounting a sliding strip (14) on a pallet, and can be fitted in place of the said structural elements.

## Revendications

1. Dispositif pour mesurer la pression de contact au niveau de pantographes électriques au moyen d'un capteur de pression, dont la grandeur de sortie apparaît sous la forme d'un flux lumineux, qui est modulé en fonction de la pression de contact qui apparaît, et est envoyé, par l'intermédiaire d'un guide d'ondes optiques (9,10) dans un transducteur optoélectronique, est converti par ce dernier en un signal électrique qui, pour son évacuation, est envoyé à l'entrée d'un régulateur, caractérisé par le fait que le capteur de pression (1) est un modulateur à micro-coudage, auquel un flux lumineux constant est envoyé par l'intermédiaire du guide d'ondes optiques raccordé (10), et que le capteur de pression (1) est agencé sous la forme d'une pièce remplaçable pour des composants du pantographe, de préférence pour la fixation d'une barrette coulissante (14) à un ensemble d'éléments de fixation (12) prévus par couples, et peut être monté à la place de ces éléments.

EP 0 363 623 B1

FIG 1

FIG 2

FIG 3

FIG 4

5